# EUROPEAN PATENT APPLICATION

(11) **EP 4 283 769 A2**
(43) Date of publication of application: **29.11.2023**
(21) Application number: 23174531.6
(22) Date of filing: 22.05.2023
(51) Int. Cl.: H01M 50/24, H01M 50/247, H01M 50/256

(54) **PASSIVELY COOLED MODULAR BATTERY POWER STATION**

(30) Priority: 23.05.2022 US 202263344871 P
(71) Applicant: Videndum Production Solutions Inc., Shelton, CT 06762 (US)
(72) Inventor: PASKO, David, Middlebury, CT (US); HUTTON, Andrew, Dunstable Bedfordshire (GB); ROSENFELD, Benjamin, Shelton, CT (US); MARKLAND, Jim, Stratford, CT (US); SINCIC, Andrew, John, Canoga Park, CA (US); PINHEIRO, Jason, Newtown, CT (US); MRAZIK, Michael, Prospect, CT (US)
(74) Representative: ATIP

(57) **Abstract**

A battery power station including a top panel, a base, and side panels which define a structure, and a first removable end panel and a second removable end panel. The battery power station includes an electronics compartment within the structure including at least one printed circuit board, and a battery compartment within the structure configured to receive a battery pack module. The base includes lateral protrusions having a hook structure configured to interdigitate with corresponding hook structure of the side panels forming a seal between the base and the side panels. The first and second removable end panels include a shell having protrusions extending from an inner surface of the shell and around a periphery of the shell, the protrusions configured to create a seal with the structure forming a seal between the structure and the first and second removable end panels.

## Description

### CROSS-REFERENCE TO RELATED APPLICATIONS

This application claims priority to U.S. Provisional Patent Application Serial No. 63/344,871, filed on May 23, 2022, the disclosure of which is hereby incorporated by reference in its entirety.

### FIELD OF DISCLOSURE

The field of the disclosure relates generally to portable power systems and, more particularly, to systems and methods for a portable power station and charger.

### BACKGROUND

Audiovisual equipment is often positioned across a stage and powered by portable and remote power stations. Equipment such as strobe or continuous lighting, sound systems, recording systems, monitors and cameras can require a continuous power draw for multiple hours. By way of example, a camera can draw upwards of 70 watts for a period of 8 or more hours, or a light can require a power draw of 200 watts. Such high loads over long periods of time cause the power station to overheat which results in premature degradation of the battery pack module. To reduce overheating, active cooling systems such as fans are incorporated into the power station. However, active cooling systems are prone to moisture and particle ingress, which can damage electrical components of the power station as well as the equipment powered by the power station.

Furthermore, replacement of the battery pack module is required at regular intervals to maintain peak performance of the power station. To replace the battery pack module, the user can manually disassemble the power station, which can result in improper re-assembly. Alternatively, the power station can be sent to the manufacturer for refurbishment, which increases operational costs of the user.

Thus, there is a need in the art to provide a power station having improved cooling and ease of re-assembly while reducing moisture and particle ingress.

### BRIEF DESCRIPTION

In one embodiment, a battery power station includes a top panel, a base, and side panels which define a structure. The battery power station includes an electronics compartment within the structure including at least one printed circuit board. The battery power station includes a battery compartment within the structure configured to receive a battery pack module. The battery power station includes a first removable end panel and a second removable end panel. The base includes lateral protrusions having a hook structure configured to interdigitate with corresponding hook structure of the side panels forming a seal between the base and the side panels. The first removable end panel and second removable end panel include a shell having protrusions extending from an inner surface of the shell and around a periphery of the shell, the protrusions configured to create a seal with the structure forming a seal between the structure and the first removable end panel and second removable end panel.

In another embodiment, a battery system includes a battery power station including a rectangular structure, a battery compartment within the rectangular structure configured to receive a battery pack module, and a first removable end panel and a second removable end panel. The first removable end panel includes a ferrous plate embedded within the shell such that an external charger can magnetically attach to the first removable end panel. The battery system includes a charger including at least two magnets to magnetically attach to the first removable end panel. The battery system includes a battery pack module including a plurality of stacked battery cells enclosed within a frame and thermal interface pads attached to the plurality of stacked battery cells, wherein the thermal interface pads are positioned on the plurality of stacked battery cells such that the thermal interface pads slide between tabs positioned on inner surfaces of the side panels.

In another embodiment, a battery power station includes a top panel, a base, and side panels defining a rectangular structure, and a removable end panel mounted with respect to the rectangular structure. The battery power station includes an electronics compartment within the rectangular structure including at least one printed circuit board. The battery power station includes a battery compartment within the rectangular structure configured to receive the battery pack module, the battery pack module is in electrical communication with the at least one printed circuit board. A method of replacing the battery pack module of the battery power station includes (i) removing the removable end panel from the rectangular structure, (ii) electrically disconnecting the battery pack module from the printed circuit board, (iii) removing the battery pack module from the battery compartment, (iv) replacing the battery pack module with another battery pack module, and (v) attaching the removable end panel to the rectangular structure.

As used herein, "a", "an", and "the" refer to both singular and plural referents unless the context clearly dictates otherwise.

As used herein, the term "or", including the claims, is used to mean "and/or" unless explicitly indicated to refer to alternatives only or to refer to the alternatives that are mutually exclusive.

As used herein, the term "about" refers to a measurable value such as a parameter, an amount, a temporal duration, and the like and is meant to include variations of +/- 15% or less, preferably variations of +/- 10% or less, more preferably variations of +/- 5% or less, even more preferably variations of +/- 1% or less, and still more preferably variations of +/- 0.1% or less of and from the particularly recited value, in so far as such variations are appropriate to perform in the invention described herein. Furthermore, it is also to be understood that the value to which the modifier "about" refers is itself specifically disclosed herein.

As used herein, spatially relative terms, such as "beneath", "below", "lower", "above", "upper", "front", "back", "side", "left", "right", "rear", and the like, are used for ease of description to describe one element or feature's relationship to another element(s) or feature(s). It is further understood that the terms "front", "back", "left", and "right" are not intended to be limiting and are intended to be interchangeable, where appropriate. Further, it should be noted that the terms "first," "second," and the like herein do not denote any order, quantity, or relative importance, but rather are used to distinguish one element from another.

As used herein, the terms "comprise(s)", "comprising", and the like, specify the presence of stated features, integers, steps, operations, elements, and/or components, but do not preclude the presence or addition of one or more other features, integers, steps, operations, elements, components, and/or groups thereof.

As used herein, the terms "configure(s)", "configuring", and the like, refer to the capability of a component and/or assembly, but do not preclude the presence or addition of other capabilities, features, components, elements, operations, and any combinations thereof.

Chemical compounds are described using standard nomenclature. For example, any position not substituted by any indicated group is understood to have its valency filled by a bond as indicated, or a by hydrogen atom.

All ranges disclosed herein are inclusive of the endpoints, and the endpoints are independently combinable with each other. Each range disclosed herein constitutes a disclosure of any point or sub-range lying within the disclosed range.

All methods described herein can be performed in any suitable order unless otherwise indicated herein or otherwise clearly contradicted by context. The use of any and all examples, or exemplary language (e.g., "such as"), is intended merely to better illustrate the invention and does not pose a limitation on the scope of the invention or any embodiments unless otherwise claimed.

Any combination or permutation of features, functions and/or embodiments as disclosed herein is envisioned. Additional advantageous features, functions and applications of the disclosed systems, methods and assemblies of the present disclosure will be apparent from the description which follows, particularly when read in conjunction with the appended figures. All references listed in this disclosure are hereby incorporated by reference in their entireties.

### BRIEF DESCRIPTION OF THE DRAWINGS

Features and aspects of embodiments are described below with reference to the accompanying drawings, in which elements are not necessarily depicted to scale.

Exemplary embodiments of the present disclosure are further described with reference to the appended figures. It is to be noted that the various features, steps and combinations of features/steps described below and illustrated in the figures can be arranged and organized differently to result in embodiments which are still within the scope of the present disclosure.

To assist those of ordinary skill in the art in making and using the disclosed assemblies, systems and methods, reference is made to the appended figures, wherein:
Fig. 1 is a perspective view of a battery power station in accordance with one or more embodiments of the present disclosure.
Fig. 2 is an exploded view of the battery power station of Fig. 1;
Fig. 3 is a perspective view of the battery power station of Fig. 1;
Fig. 4 is a detailed view of the battery power station of Fig. 1;
Fig. 5 is a top view of the battery power station of Fig. 1;
Fig. 6 is a perspective view of a battery pack module in accordance with one or more embodiments of the present disclosure;
Fig. 7 is a perspective view of a battery pack module of Fig. 1;
Fig. 8 is an exploded view of the battery power station of Fig. 1;
Fig. 9 is a perspective view of a battery power station and a charger in accordance with one or more embodiments of the present disclosure;
Fig. 10 is a perspective view of the charger of Fig. 9;
Fig. 11 is a top view of the charger of Fig. 9;
Fig. 12 is a perspective view of a removable end panel in accordance with one or more embodiments of the present disclosure;
Fig. 13 is a perspective view of the removable end panel of Fig. 12;
Fig. 14 is a perspective view of the battery power station of Fig. 1;
Fig. 15 illustrates a schematic representation of the power station system in accordance with one or more embodiments of the present disclosure;
Fig. 16 is a perspective view of a battery power station and a charger in accordance with one or more embodiments of the present disclosure;
Fig. 17 is a perspective view of a removable end panel in accordance with one or more embodiments of the present disclosure;
Fig. 18A is a front view of a removable end panel in accordance with one or more embodiments of the present disclosure;
Fig. 18B is a cross-sectional view of a removable end panel taken along section line A-A of Fig. 18A;
Fig. 19 is a perspective view of a support plate of a removable end panel in accordance with one or more embodiments of the present disclosure;
Fig. 20 is a side view of a support plate of a removable end panel in accordance with one or more embodiments of the present disclosure;
Fig. 21A is a perspective view of a removable end panel in accordance with one or more embodiments of the present disclosure;
Fig. 21B is an enlarged view of a portion of the removal end panel of Fig. 21A;
Fig. 22 is an exploded view of a printed circuit board and a side panel of a battery power station in accordance with one or more embodiments of the present disclosure;
Fig. 23A is a top exploded view of a top panel of a battery power station in accordance with one or more embodiments of the present disclosure;
Fig. 23B is a bottom exploded view of a top panel of a battery power station in accordance with one or more embodiments of the present disclosure;
Fig. 24 is an exploded view of a battery power station in accordance with one or more embodiments of the present disclosure; and
Fig. 25 is a perspective view of a handle with a section removed for clarity in accordance with one or more embodiments of the present disclosure.

### DETAILED DESCRIPTION

In the following specification and the claims, reference will be made to a number of terms, which shall be defined to have the following meanings.

Embodiments of the present disclosure are directed to a battery power station having passive cooling and improved moisture and particle ingress. The battery power station includes a removable battery pack module which can be replaced as the battery pack module degrades and/or depletes over continued use, and a modular charging system to recharge the power station. The battery power station includes a processor configured to monitor the health of the battery pack module, and the processor can detect if a new battery pack module has been replaced. The processor is further configured to store user settings in memory from a prior battery pack module to a replacement battery pack module, as well as performing health tests of the installed battery pack module and store the health test results in memory. The battery power station further includes a user interface to display metrics to the user, such as charge capacity, runtime remaining, time to charge, amperage output, power draw, output voltage, electronic fuse status, the battery pack module serial number.

The removable battery pack module may include one or more lithium-ion (Li-ion) cells, sodium-based cells (e.g., sodium-ion cells, molten sodium cells), lead-acid cells, nickel-cadmium (NiCd) cells, nickel-metal hydride (NiMH) cells, and combinations thereof. In some instances, the battery power system may include a plurality of removable battery pack modules. The plurality of removable battery pack modules may include a plurality of battery cells, which are electrically connected in series, in parallel, or partially in series and partially in parallel. In a non-limiting example, the removable battery pack module may include about 144 individual cells. However, the quantity of the individual cells positioned within the removable battery pack module may be adjusted based on a desired capacity and/or voltage.

In some instances, the individual cells may be positioned within a battery pack which may be positioned within the removable battery pack module. Therefore, the removable battery pack module may include a plurality of battery packs, each including a plurality of individual cells. In a non-limiting example, the removable battery pack module may include about 144 individual cells distributed within about four (4) battery packs. However, the quantity of the individual cells and the battery packs positioned within the removable battery pack module may be adjusted based on a desired capacity and/or voltage.

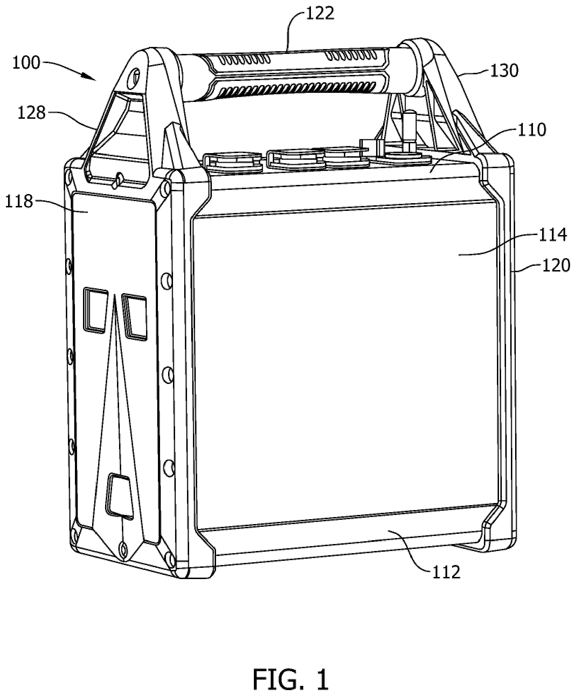

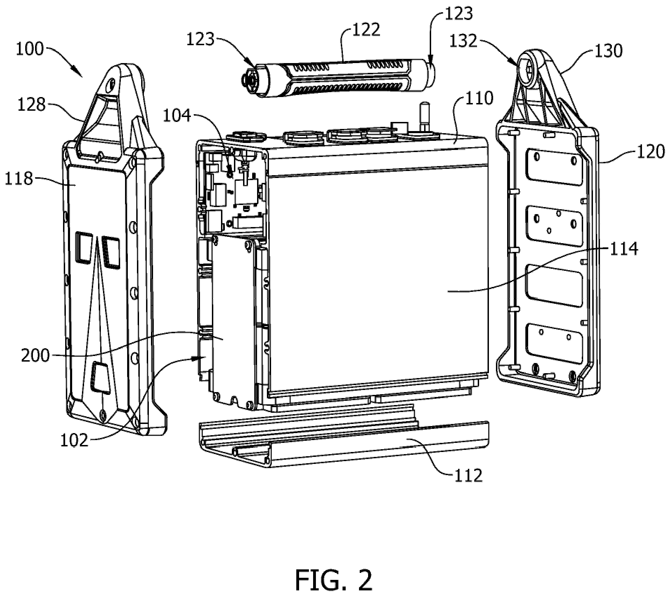

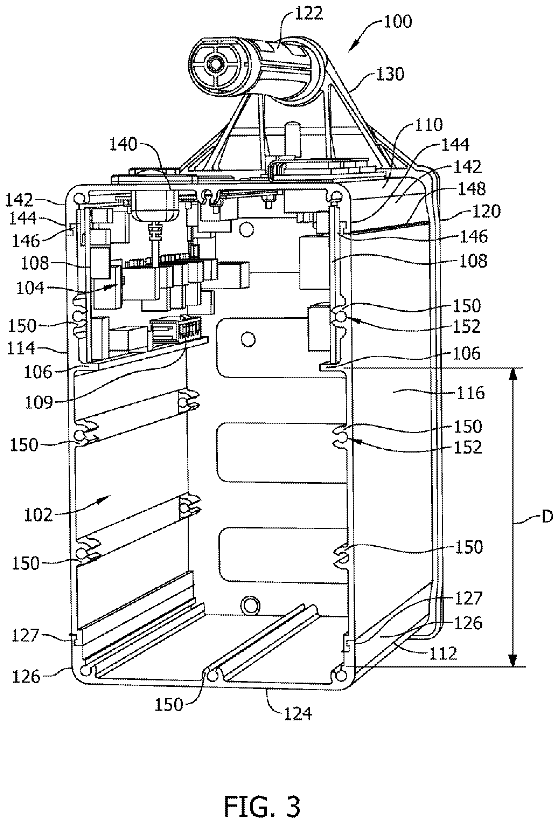

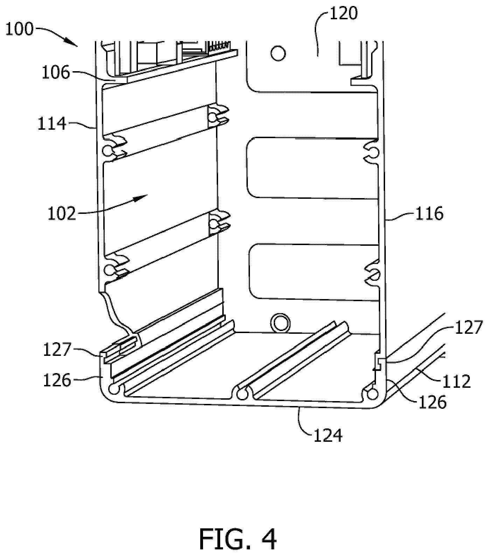

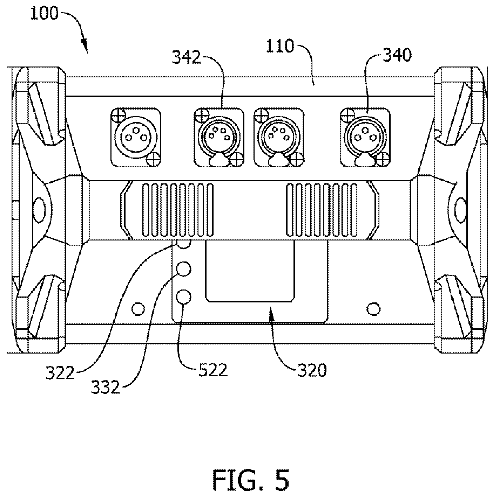

Fig. 1 illustrates a perspective view of the battery power station 100 and Fig. 2 illustrates an exploded view of the battery power station 100. Figs. 3 and 4 illustrate detailed views of the battery power station 100 with a first removable end panel 118 showing a battery compartment 102 of the battery power station 100. Fig. 5 illustrates a top view of the battery power station 100.

As shown in Figs. 1-4, the battery power station 100 includes a top panel 110, a base 112 opposite the top panel 110, side panels (114, 116), a first removable end panel 118 and a second removable end panel 120. When assembled, the top panel 110, base 112 and side panels (114, 116) define a hollow rectangular structure that further includes a battery compartment 102 and an electronics compartment 104. It should be understood, however, that when assembled, top panel 110, base 112, and side panels (114, 116) may define any sized/shaped hollow structure that further includes a battery compartment 102 and an electronics compartment 104. For example, the hollow structure may be circular, triangular, trapezoidal, and the like. In some embodiments, the battery compartment 102 is adjacent to the base 112 and the electronics compartment 104 is adjacent to the battery compartment 102 and top panel 110. As assembled, the first removable end panel 118 and second removable end panel 120 sealingly abut the free ends of the side panels (114, 116), defining the battery compartment 102 and electronics compartment 104 within the housing. In some embodiments, top portion 128 of the first removable end panel 118 and a top portion 130 of the second removable end panel 120 extend beyond the top panel 110 and include recesses 132 adapted to receiving opposite ends 123 of a handle 122 (see Figs. 2, 3, 24, 25). As best shown in Fig. 3, a protrusion 106 demarcates the battery compartment 102 and electronics compartment 104. The protrusion 106 extends from an inner surface of the side panels (114, 116) a portion of the distance into the interior of the housing and associated compartments and is positioned a distance D from the inner surface of the flat medial portion 124 of the base 112. In some embodiments, the protrusion 106 spans the distance between first and second end panels 114, 116 and extends from one side panel 114 to the second end panel 116, isolating the battery compartment 102 from the electronics compartment 104.

Top panel 110, the base 112, the side panels (114, 116), the first removable end panel 118, the second removable end panel 120, and the handle 122 may each be fabricated from a variety of materials, including but not limited to, metal (e.g., steel, aluminum, titanium, iron, copper), metal alloys (e.g., ferrous alloys, aluminum alloys, nickel alloys, copper alloys, titanium alloys), plastic, polymers (e.g., thermoplastic polymers, thermosetting polymers, elastomers), fiberglass, rubber, composites (e.g., particulate composites, fibrous composites, laminated composites), and combinations thereof.

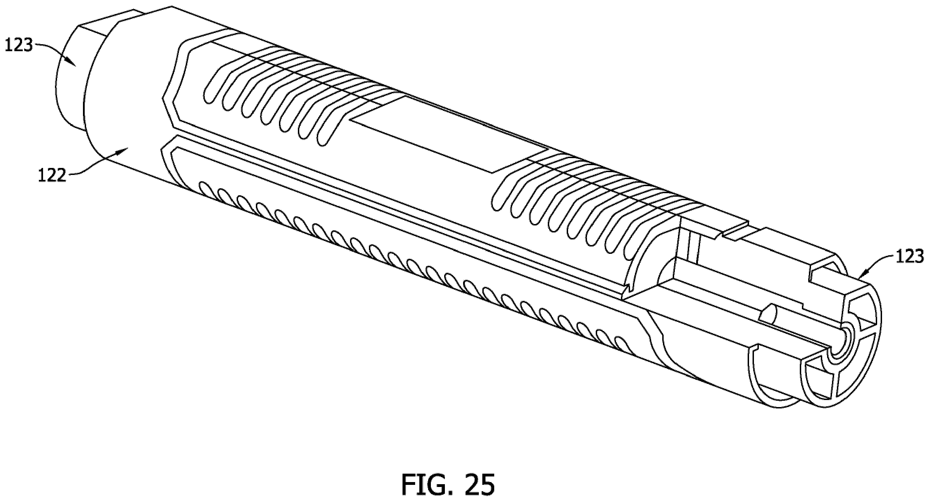

As illustrated in Fig 25, handle 122 may be fabricated from a first material, selected from the group including, a metal or metal alloy, and a second material, selected from the group including, a plastic, polymer, or rubber. In some instances, handle 122 may be fabricated from a third material, selected from the group including, polypropylene, rubber, plastic. For example, handle 122 may be fabricated from aluminum and may be over-molded with a thermoplastic elastomer (TPE) and/or a polypropylene. Handle 122 may also include features to create an ergonomic shape for ease of use. The result is a lightweight, less expensive, and ergonomic handle for battery power station 100.

Printed circuit boards 108 can be positioned on the inner surfaces of the side panels (114, 116) within the electronics compartment 104. As explained in further detail below, the printed circuit boards 108 include a processor and memory for controlling functionalities of the battery power system 100. The printed circuit boards 108 further include power terminals 109 for connecting the removable battery pack module 200 to the battery power station 100.

As best shown in Figs. 3 and 4, the base 112 has a U-shaped body having a flat medial portion 124 and lateral protrusions 126 extending from the medial portion 124. Each of the lateral protrusions 126 has a hook structure 127 at the edge of the lateral protrusion 126 which interdigitates with a corresponding hook structure 134 at the bottom edges 136 of the side panels (114, 116) forming a bottom seal as the side panels and base are connected. Likewise, as best shown in Fig. 3, the top panel 110 has a U-shaped body having a flat medial portion 140 and lateral protrusions 142 extending from the medial portion 140. Each of the lateral protrusions 142 has an elongate sealing member at the edge of the lateral protrusion which interdigitates with a corresponding elongate sealing members at the top edges 148 of the side panels (114, 116) forming a top seal. In some embodiments, the sealing members include a hook structure 144 at the edge of the lateral protrusion 142 which interdigitate with a corresponding hook structure 146 at the top edges 148 of the side panels (114, 116) forming a top seal. The top hook portion is similar structurally and functionally to the hook portion associated with the base. As explained in further detail below, upon assembly of the first removable end panel 118 and second removable end panel 120, in combination with side panels 114, 116, base 112 and top panel 110, the entire battery power station 100 is sealed from moisture and particle ingress.

Referring now to Fig. 3, inner surfaces of the top panel 110, base 112 and side panels (114, 116) include tabs 150 extending from the inner surfaces. The tabs 150 further include threaded bores 152 for receiving fasteners to secure the first removable end panel 118 and the second removable end panel 120 to the rectangular structure of the battery power station 100. In some embodiments, the tabs 150 extend between aligned tabs, as shown relative to base 112. The elongate sealing members 144 that extend between the aligned tabs serve to impede the ingress of fluid and particulate matter when the battery is located in the housing compartment. In some embodiments, the tabs 150 extend a distance from the openings of the rectangular structure where the first removable end panel 118 and the second removable end panel 120 abut the rectangular structure. As explained in further detail below, in some embodiments, the tabs 150 are configured as guides for proper insertion of the removable battery pack module 200.

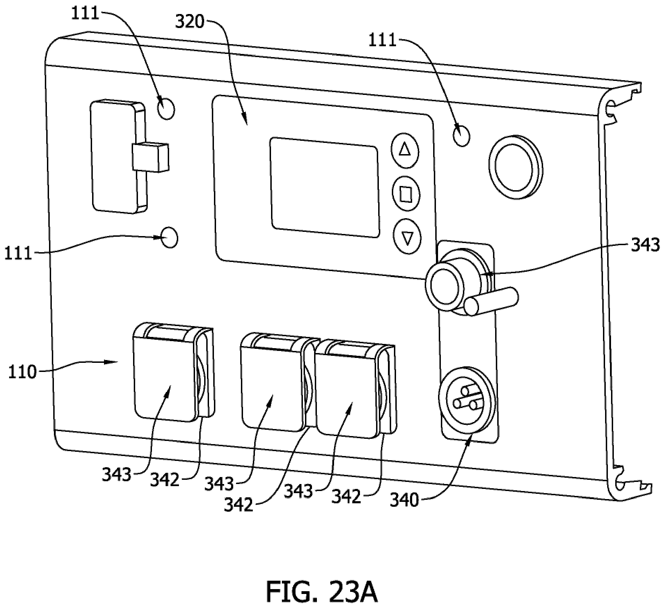

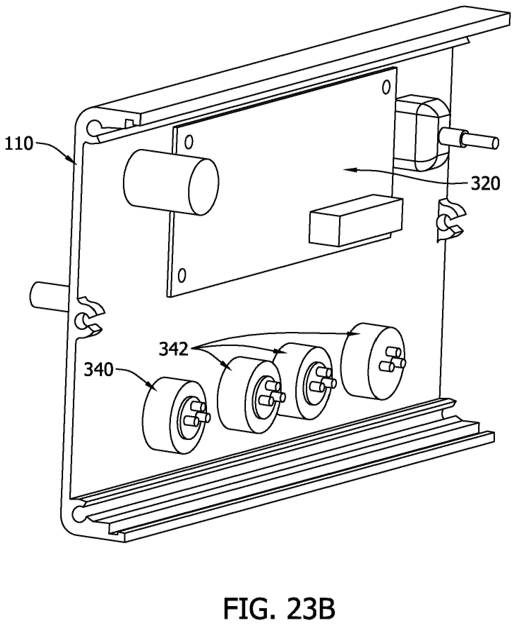

Referring to Figs. 5, 23A and 23B, the top panel 110 includes a user interface 320 and a plurality of electrical inputs 340 and electrical outputs 342. The user interface 320 is communicatively connected to the printed circuit boards 108 for receiving and sending data, and the plurality of electrical inputs 340 and electrical outputs 342 are electrically connected to the printed circuit boards 108 for receiving power from the battery pack module 200. In some embodiments, the user interface 320 is a liquid crystal display (LCD). In some embodiments, the user interface 320 is a touch-enabled LCD. In some embodiments, the user interface 320 further includes user inputs 322 configured to select options or enable functionalities of a power station system 300 as explained in further detail below. In audiovisual applications, the electrical inputs 340 and electrical outputs 342 are external line return (XLR) connectors. In some embodiments, the electrical inputs 340 and electrical outputs 342 are Deutsches Institut für Normung (DIN) connectors. In some embodiments, the electrical outputs 342 are XLR4 14.4V outputs. In some embodiments, the electrical outputs 342 are XLR3 28/48V Outputs. The XLR4 and XLR3 outputs can be at various amperage outputs. By way of example, but not limitation, the XLR4 14.4V output can be in the range of 20A to 24A total amperage, and the XLR3 28/48V output can be in the range of 10A to 16A total amperage.

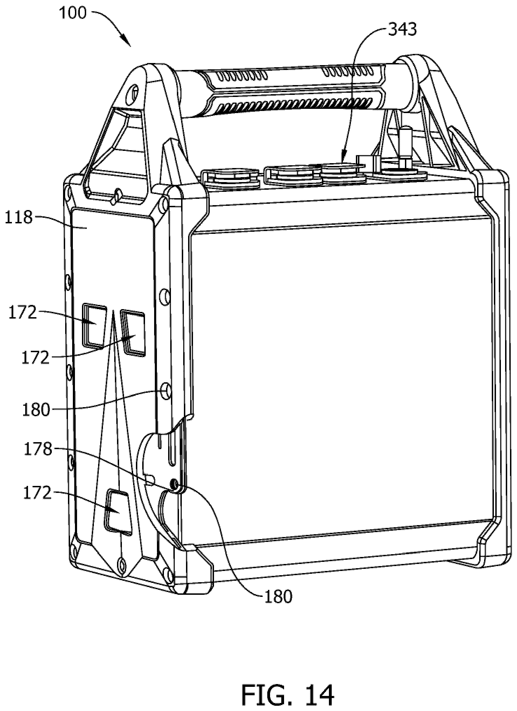

Battery power station 100 may further include a cover 343 configured to selectively seal one of electrical input(s) 340 or electrical output(s) 342. Battery power station 100 may include a plurality of covers 343 configured to selectively seal each electrical input 340 and electrical output 342 (and other connectors). Covers 343 may be configured to selectively move between an open position and a closed position such that in an open position the electrical connector 340, 342 is accessible for use, and in the closed position the electrical connector 340, 342 is sealed. Referring to Figs. 14 and 23A, covers 343 may be hingeably attached to top panel 110, either directly or indirectly. As illustrated, cover 343 of electrical input 340 is positioned in the open position such that electrical input 340 is accessible for use and covers 343 for each of the electrical outputs 342 are in the closed position such that electrical outputs 342 are sealed. In some instances, the cover 343 may be over-molded over the respective connector, which may provide a tight seal between cover 343 and top panel 110 and enable cover 343 to move between the open position and closed position without removal of the cover 343.

Referring to Figs. 23A and 23B, top panel 110 may be removable from battery power station 100. Specifically, top panel 110 may be removable from side panels 114, 116, removable end panels 118, 120, 402, and combinations thereof. In some instances, top panel 110 may include/define elements/features that are removably attached to one or more components of battery power station 100. For example, top panel 110 may define opening 111 configured to receive a fastener and a corresponding threaded feature (not shown) may be associated with a component of battery power station 100 (e.g., side panels 114, 116, removable end panels 118, 120, 402). In addition to top panel 110 being removable from battery power station 100, electrical input 340, electrical output 342, and user interface 320 may each be removable from top panel 110.

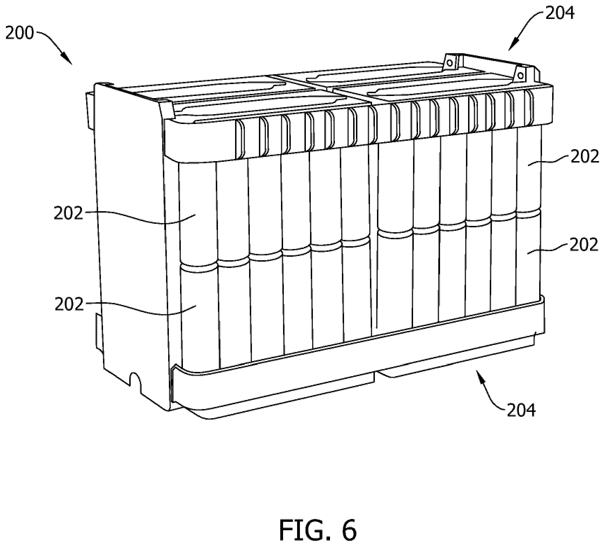

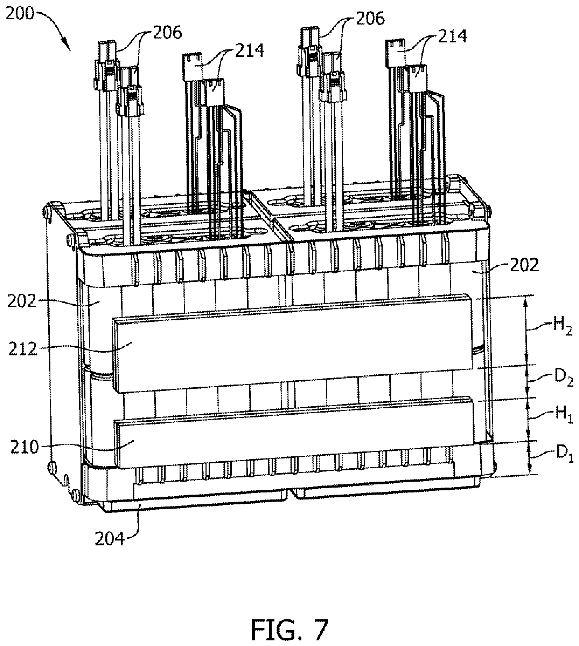

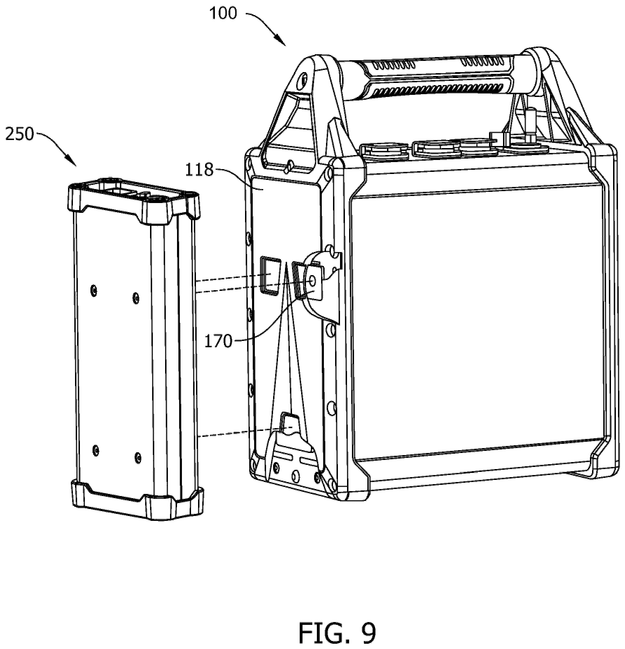

Turning to Figs. 6 through 8, the battery pack module 200 includes a plurality of stacked battery cells 202 enclosed within a frame 204. The frame has a height, depth and width configured to fit within the battery compartment 102 (See Figs. 2, 8, and 24). The battery pack module 200 is insertable and removable from the battery compartment 102 and as a result, the battery pack module can be easily replaced when required. As best shown in Fig. 7, respective power connectors 206 are electrically connected to each of the plurality of stacked battery cells 202 and are configured to removably connect to the power terminals 109 of the printed circuit boards 108 and deliver power to the electrical output 342. The plurality of stacked battery cells 202 are also configured to recharge and receive power from an external charger 250 (as shown in Fig. 9). The external charger 250 electrically connects to the electrical input 340 for recharging the plurality of stacked battery cells 202. Respective data connectors 214 are also connected to the plurality of stacked battery cells 202 and are configured to removably connect to data terminals of the printed circuit boards 108 and are configured to send data to the processor 310.

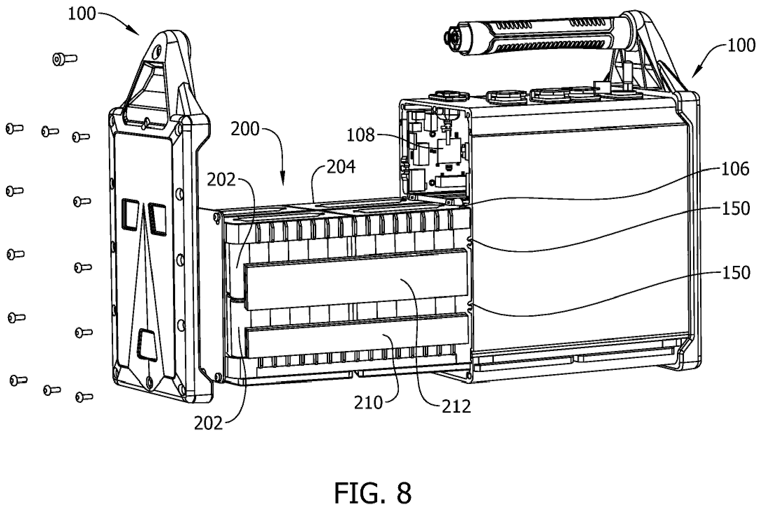

As best shown in Figs. 7 and 8, thermal interface pads (210, 212) are positioned on sides of the plurality of stacked battery cells 202. The thermal interface pads (210, 212) have heights (H₁ and H₂) and are positioned a distance Di from a bottom of the frame 204 and the interface pads are separated by a distance D₂. The respective thermal pad heights (Hi and H₂) and distances (D₁ and D₂) are sized and configured to fit the thermal interface pads (210, 212) between the tabs 150 of the side panels (114, 116). Stated differently, the tabs 150 of the side panels (114, 116) are configured as guides for insertion of the battery pack module 200. Due to the spacing of the thermal interface pads (210, 212), the battery pack module 200 can only be inserted one-way into the battery compartment 102 with the power connectors 206 of the battery pack module 200 oriented towards the electronics compartment 104. When assembled, the thermal interface pads (210, 212) are in direct contact with the plurality of stacked battery cells 202 and the side panels (114, 116) such that heat can be dissipated from the plurality of stacked battery cells 202 through the interface pads to the side panels (114, 116) and thereby passively cool the plurality of stacked battery cells 202 without the need of internal airflow circulation or fans. Thus, the battery power station 100 can remain sealed from moisture and particle ingress.

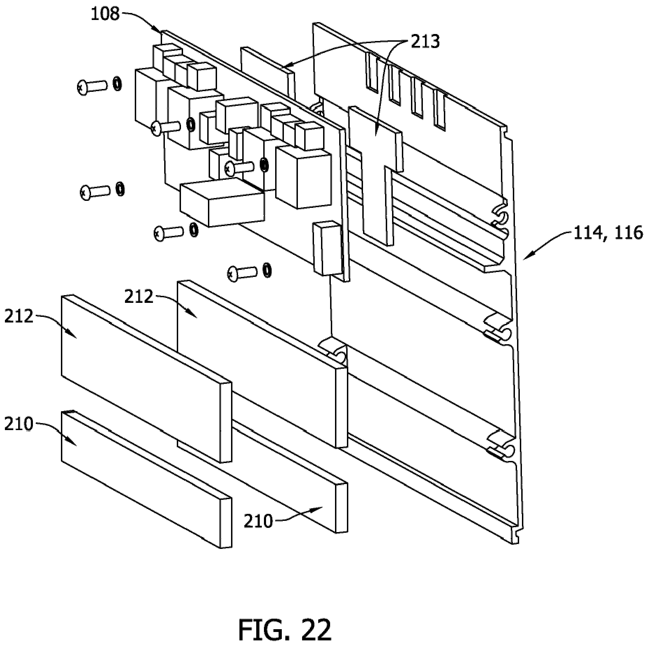

As illustrated in Fig. 22, battery power station 100 may include thermal interface pad 213 positioned between printed circuit board 108 and side panel 114 or side panel 116. Battery power station 100 may include at least two thermal interface pads 213 for each printed circuit board 108. Thermal interface pad 213 may be sized and shaped to interface with desired components (e.g., components that routinely produce an increased temperature) of the printed circuit board 108. For example, thermal interface pad 213 may be define a T-shape, as illustrated.

Thermal interface pads 210, 212, 213 may be fabricated from a variety of materials, including but not limited to, aluminum, rubber, fiberglass, and combinations thereof. In a non-limiting example, the thermal interface pads 210, 212, 213 may be a thermal GAP PAD^{®} manufactured by Henkel Corporation (Rocky Hill, CT). Improved thermal management within battery power station 100 may reduce charge times of the battery cells 202. Thus, thermal interface pads 210, 212, 213 serve to reduce charge times. Additionally, side panels (114, 116) may act as a heat sink to extract heat from the stacked battery cells 202 and printed circuit board 108 through the corresponding thermal interface pad(s) 210, 212, 213.

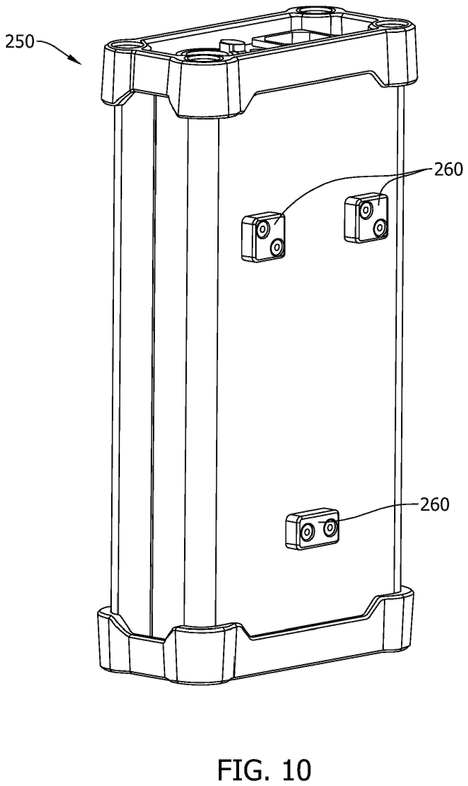

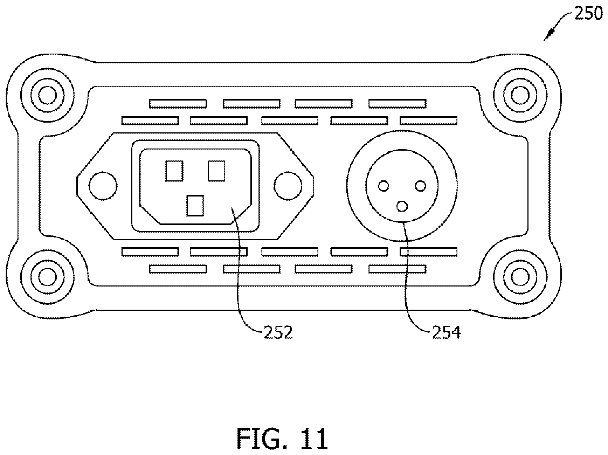

As shown in Figs. 9 through 12, the external charger 250 includes a rectangular structure and is configured to removably attach to the first removable end panel 118. It should be understood, however, that the external charger 250 may include any size/shaped structure, including but not limited to, a structure that is circular, triangular, trapezoidal, and the like. The external charger 250 includes a power input 252 for receiving 110V or 220V, supplied by a power supply external to the charger 250, and a power output 254 connected to the power supply. The power output 254 of the charger 250 can removably connect to the electrical input 340 of the battery pack module 200 for charging the plurality of stacked battery cells 202 of the battery pack module 200.

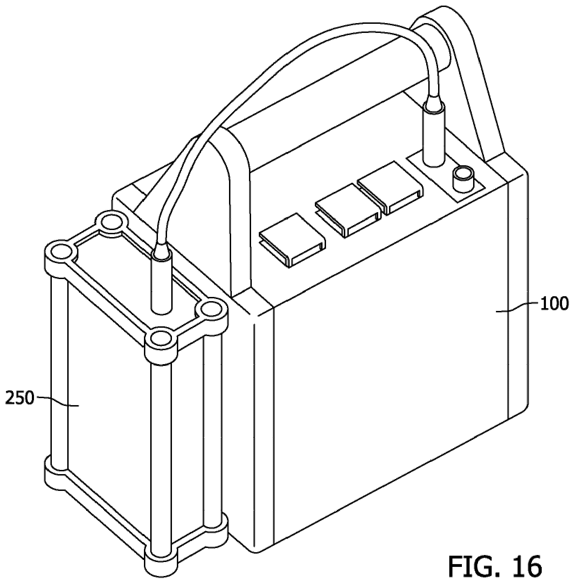

The external charger 250 further includes at least two connection structures 260 for removably attaching the external charger 250 to the first removable end panel 118. As a result, the charger and battery can be transported as a single unit thereby simplifying the portability of the charger and battery pack. In some embodiments, the external charger 250 further includes three connection structures 260 for removably attaching the external charger 250 to the first removable end panel 118. In some embodiments, the three connection structures 260 are magnets fixed to the exterior charger housing. The magnets are oriented with two laterally aligned magnets near one end of the charger and a single magnet near the charger's opposite end. The magnets are adapted to be seated in similarly oriented recesses along end 118. Ferrous plates 170 are included in the recesses. There are two aligned recesses provided in end panel near end 128 and a single recess near the opposite end of the end 118 panel. As shown in Fig. 16, the charger magnets are removably seated in the recesses so that the magnets removably couple to the ferrous plate to maintain the charger against the battery pack enabling their movement as a single unit.

In addition to the ability to move the battery and charger as a unit, there are other benefits associated with removably locating the charger along the exterior of the battery housing, in ambient conditions. Because the power supply of the charger 250 is exterior to the battery power station 100, the heat envelope of the power station 100 does not have to account for the power supply. Thus, the charger 250 can have air vents to compensate for heat generation of the power supply, while the battery power station 100 can remained sealed from moisture and particle ingress because the main source of heat of the battery power station 100 is primarily from the plurality of stacked battery cells 202, which are passively cooled.

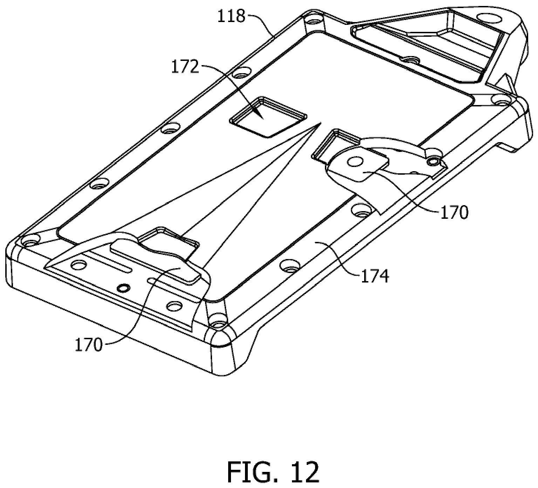

As shown in Fig. 12, the ferrous plate 170 is molded or otherwise embedded within a shell 174. Shell 174 may be fabricated from a variety of materials, including but not limited to, metal (e.g., steel, aluminum, titanium, iron, copper), metal alloys (e.g., ferrous alloys, aluminum alloys, nickel alloys, copper alloys, titanium alloys), plastic, polymers (e.g., thermoplastic polymers, thermosetting polymers, elastomers), fiberglass, rubber, composites (e.g., particulate composites, fibrous composites, laminated composites), and combinations thereof. In some instances, shell 174 may be fabricated from a thermoplastic elastomer (TPE). Reference to one type of shell 174 (e.g., TPE shell 174) does not preclude use of other materials, unless the context specifically indicates otherwise.

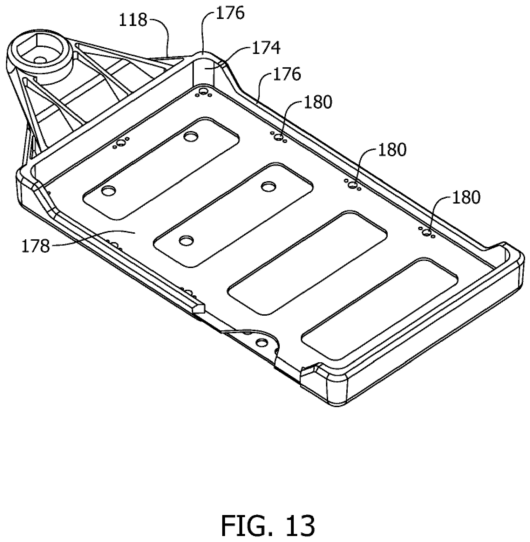

In some embodiments, the TPE shell 174 has a wall thickness that is decreased, relative to the remainder of the shell, where the at least two connection structures 260 of the charger 250 connect to the charger housing along the end panel 118. The portions with decreased wall thickness relative to the remainder of shell 174 are illustrated as connection regions 172. As shown in Fig. 13, the TPE shell 174 includes protrusions 176 extending from an inner surface of the TPE shell 174. The protrusions 176 extend along the periphery of the TPE shell 174 and are configured to create a seal with the side panels (114, 116), base 112 and top panel 110 of the battery power station 100 such that the battery power station 100 is resistant or impermeable to moisture or particle ingress. When assembled, the protrusions 176 envelop and extend a distance over the edges of the rectangular structure from an outer surface of the rectangular structure.

As shown in Figs. 13 and 14, In some embodiments, a support plate 178 can be embedded or attached to the TPE shell 174 for improved structural rigidity of the first removable end panel 118 and the second removable end panel 120. The TPE shell 174 and the support plate 178 can include apertures 180 corresponding to and aligning with the tabs 150. Threaded fasteners can be inserted into the apertures 180 and can be threaded to the threaded bores 152 of the tabs 150.

In some embodiments, the ferrous plate 170 is electrically connected to the printed circuit boards 108 such that the plurality of stacked battery cells 202 are charged by the charger 250 through the magnets. In some embodiments, the magnets of the charger 250 can magnetically charge the plurality of stacked battery cells 202 magnetically.

In another embodiment, battery power station 100 may include removable end panel 402. Unless otherwise stated, features of first removable end panel 118 and removable end panel 402 may be interchangeable. Unless otherwise stated, features of second removable end panel 120 and removable end panel 402 may be interchangeable. Battery power station 100 may include two removable end panels 402. Thus, battery power station 100 may include a first removable end panel 402 and a second removable end panel 402.

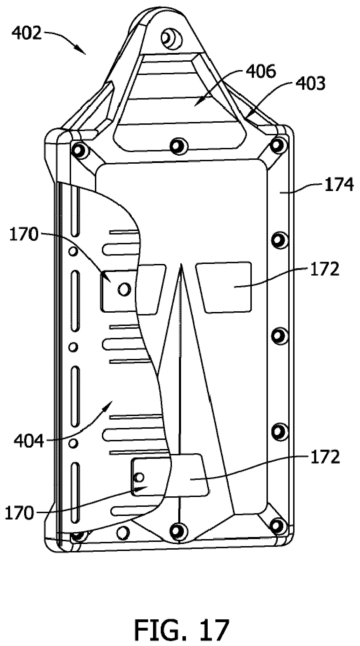

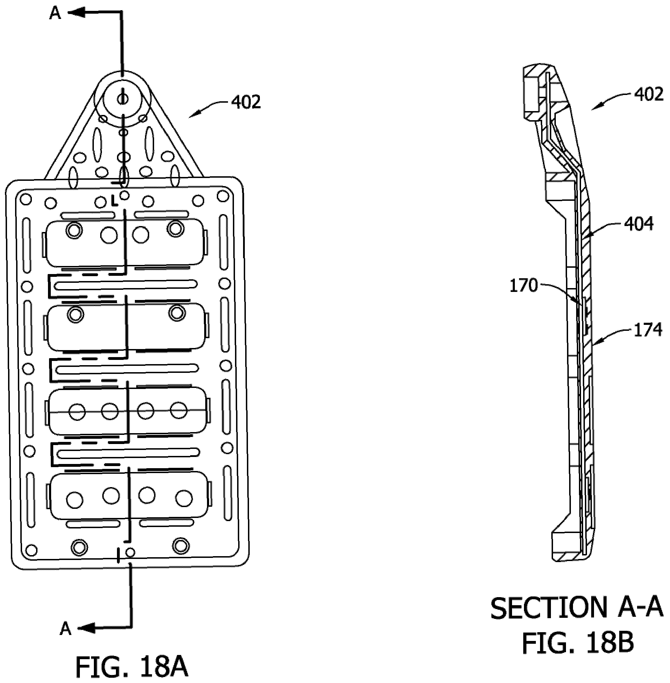

As shown in Figs. 17-21B and 24, removable end panel 402 may include a shell 174 and a support plate 404. The shell may be made from a thermoplastic elastomer (TPE). In some instances, removable end panel 402 may include a ferrous plate 170 that is molded or otherwise embedded within the shell 174. In some embodiments, the thickness of the shell 174 is decreased relative to the entire shell body, where the at least two connection structures 260 of the charger 250 connect to the end panel (illustrated as connection regions 172).

Similar to the features shown in Fig. 13, the shell 174 of removable end panel 402 may include protrusions 176 that extend from an inner surface of the shell 174. The protrusions 176 extend along the periphery of the shell 174 and are configured to create a seal with the side panels (114, 116), base 112 and top panel 110 of the battery power station 100 such that the battery power station 100 is resistant or impermeable to moisture or particle ingress. When assembled, the protrusions 176 envelop and extend a distance over the edges of the rectangular structure from an outer surface of the rectangular structure. In some instances, the removable end panel 402 may include a gasket that extends at least partially along the periphery of the shell 174 and/or support plate 404 and is configured to create a seal with the side panels (114, 116), the base 112, and/or the top panel 110 of the battery power station 100.

Support plate 404 may be at least partially embedded and/or attached to the shell 174 for improved structural rigidity of the removable end panel 402. In some instances, support plate 404 is embedded within shell 174 such that shell encases at least an outer portion of support plate 404. In some instances, the rigidity of the support plate 404 may improve the functionality of the gasket, as described above. Support plate 404 may be fabricated from a variety of materials, including but not limited to, metal (e.g., steel, aluminum, titanium, iron, copper), metal alloys (e.g., ferrous alloys, aluminum alloys, nickel alloys, copper alloys, titanium alloys), plastic, polymers (e.g., thermoplastic polymers, thermosetting polymers, elastomers), fiberglass, rubber, composites (e.g., particulate composites, fibrous composites, laminated composites), and combinations thereof. In some instances, support plate 404 is a metal or metal alloy.

In one embodiment, removable end panel 402 may include a shell 174, a support plate 404, fabricated from aluminum, and a ferrous plate 170, fabricated from steel. The shell 174 may function as, among other uses, a gasket to seal battery power station 100, the aluminum support plate 404 may provide for light-weight rigidity, and the steel ferrous plate 170 is magnetic to attach with charger 250.

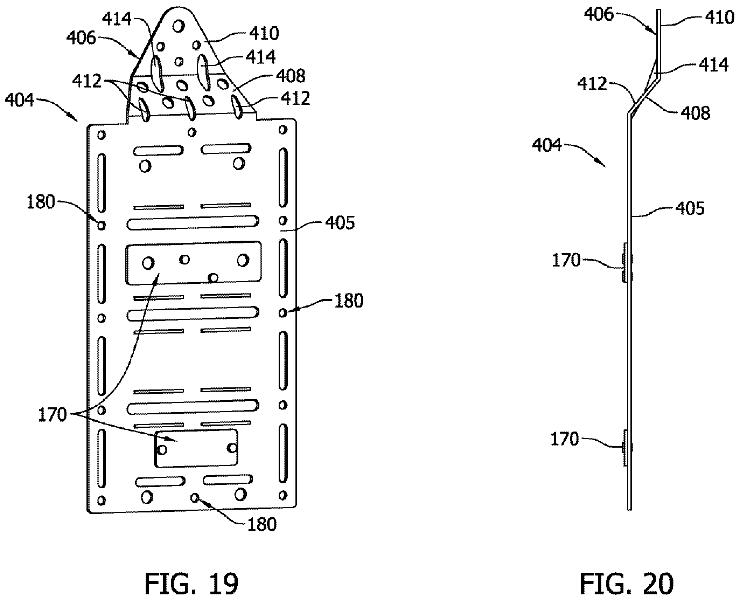

As illustrated in Figs. 17-20, support plate 404 includes a gusset 406. Support plate 404 may define the gusset 406 such that it is in proximity to the top portion of end panel 402 (e.g., in proximity to handle 122). The gusset 406 may improve the strength of removable end panel 402 while requiring less material thereby minimizing the weight of the panel. Gusset 406 may define lower portion 408 and upper portion 410. Referring to Fig. 20, lower portion 408 of gusset 406 may be angled with respect to support plate 404 (e.g., support plate body 405). Upper portion 410 of gusset 406 may be angled with respect to lower portion 408. Lower portion 408 may be obtusely angled with respect to the inside surface (e.g., the surface opposite the ferrous plate 170) of support plate body 405 of support plate 404. Lower portion 408 is angled with respect to both support plate body 405 of support plate 404 and upper portion 410 of gusset 406. In some instances, upper portion 410 and support plate body 405 of support plate 404 may be substantially parallel.

Gusset 406 may further define lower and upper ribs positioned with respect to the lower and upper portions 408, 410. Lower and upper ribs 412, 414 may protrude outwardly from gusset 406 in a direction toward the exterior of the removable end panel 402 or toward the interior of the removable end panel 402. As illustrated in Fig. 20, lower and upper ribs 412, 414 protrude outwardly from gusset 406 in the direction toward the exterior of the removable end panel 402 so as to define a raised portion. Lower rib 412 may extend between support plate body 405 of support plate 404 and lower portion 408 of gusset 406. Upper rib 414 may extend between lower portion 408 of gusset 406 and upper portion 410 of gusset 406. Lower rib 412 and upper rib 414 may each provide structural support/rigidity to gusset 406. Specifically, lower rib 412 may provide support to at least lower portion 408 of gusset 406 and upper rib 414 may provide support to at least upper portion 410 of gusset 406. Gusset 406 may define at least one lower rib 412 and at least one upper rib 414. Gusset 406 may define a plurality of lower ribs 412 and a plurality of upper ribs 414. As illustrated, gusset 406 defines three lower ribs 412 and two upper ribs 414. It should be understood, however, that gusset 406 may define lower and upper ribs 412, 414 of varying size, quantity, and location.

The shell 174 and the support plate 404 of end plate 402 may include apertures 180 corresponding to and aligning with the tabs 150 when assembled. Fasteners may be inserted into the apertures 180 and may interface with bores 152 of tabs 150. For example, fasteners may be threaded into the threaded bores 152 of the tabs 150. Shell 174 and support plate 404 may include recessed portion 416 which are coaxial with apertures 180. Recessed portion 416 (e.g., counterbore, countersink) may be configured (e.g., size, shape) to receive a portion of the fasteners. For example, recessed portion 416 may receive at least the head of the fasteners such that the end is flush with or recessed below shell 174.

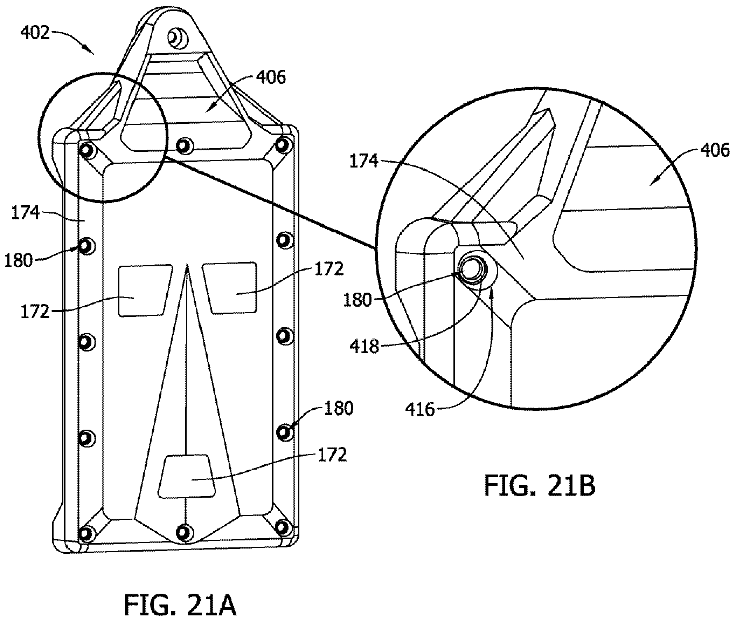

Shell 174 and support plate 404 may further include aperture seal 418 that is configured to at least fit within aperture 180, recessed portion 416 or aperture 180 and recessed portion 416. See FIG. 21B. Aperture seal 418 may be configured to have an opening that is equal to or smaller in size than the fastener configured to be inserted into aperture 180. In other instances, aperture seal 418 may not include an opening but may be configured such that the fastener may be inserted through aperture seal 418 to create an opening. In some instances, aperture seal 418 may be formed from shell 174 such that aperture 180 and/or recessed portion 416 are embedded within shell 174.

In other embodiments, removable end panel 402 may include and/or define one or more elements/features configured to attach with other components of battery power station 100, including but not limited to, top panel 110, side panels (114, 116), and base 112. The elements/features may include, but are not limited to, keyed features, snap buttons, tabs, prongs, slots, and combinations thereof. The elements/features of removable end panel 402 are configured to removably engage other components of battery power station 100 to ensure a sealed connection. Thus, other elements/features not depicted or described should be understood to those skilled in the art.

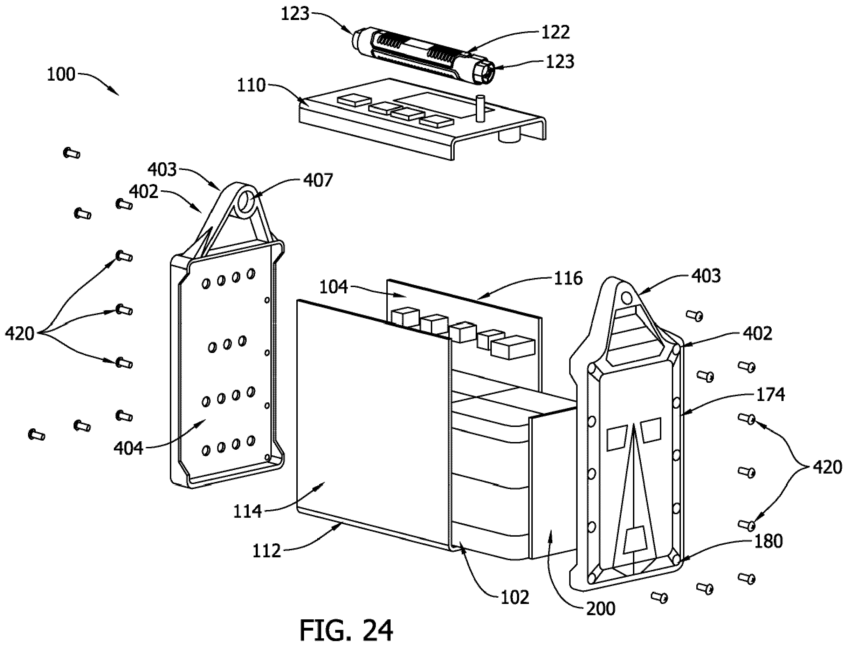

Fig. 24 illustrates the battery power station 100 includes the top panel 110, the base 112 opposite the top panel 110, side panels (114, 116), and the removable end panels 402. When assembled, the top panel 110, base 112 and side panels (114, 116) define a hollow rectangular structure that further includes the battery compartment 102 and the electronics compartment 104. In some embodiments, the battery compartment 102 is adjacent to the base 112 and the electronics compartment 104 is adjacent to the battery compartment 102 and top panel 110. As assembled, the removable end panels 402 sealingly abut the free ends of the side panels (114, 116), defining the battery compartment 102 and electronics compartment 104 within the housing. In some embodiments, the top portion 403 of a first removable end panel 402 and a top portion 403 of the second removable end panel 402 extend beyond the top panel 110 and include recesses 407 adapted to receiving opposite ends 123 of a handle 122. Fasteners 420 may be inserted into the apertures 180 and may interface with bores 152 of tabs 150 of side panels (114, 116).

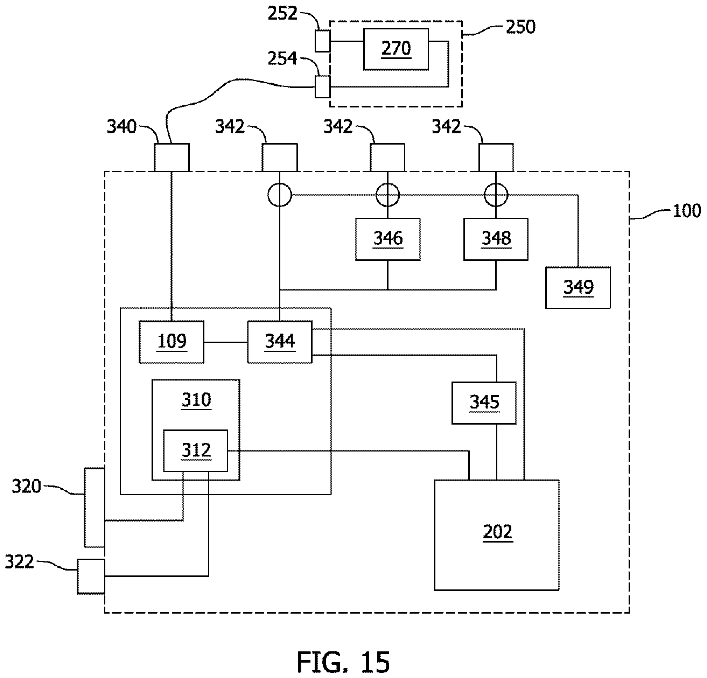

Fig. 15 illustrates a schematic representation of the power station system 300. The power station system 300 includes the charger 250 and the power supply station 100. The charger 250 includes the power input 252 electrically connected to DC/DC converter 270, and the DC/DC converter is electrically connected to the power output 254. The power output 254 of the charger 250 is electrically connected to the electrical input 340 of the power supply station 100.

The electrical input 340 of the power supply station 100 is electrically connected to the power terminals 109 of the printed circuit boards 108. The printed circuit boards 108 are connected to the plurality of stacked battery cells 202 and to the electrical outputs 342. A combiner 345 is positioned downstream of the stacked battery cells 202. In some embodiments, the printed circuit boards 108 include electronic circuit breakers 344 to protect the plurality of stacked battery cells 202 and the components connected to the electrical outputs 342. In some embodiments, a converter 346 can be upstream of the electrical outputs 342. In some embodiments, an AC/DC module 348 can be upstream of the electrical outputs 342. In some embodiments, a current/voltage monitor 349 is positioned upstream of the electrical outputs 342.

The printed circuit boards 108 further includes a processor 310 communicatively connected to memory 312 for storing instructions. The processor 310 is communicatively connected to the plurality of stacked battery cells 202 for receiving data from the plurality of stacked battery cells 202. The processor is further connected to the interface 320 for displaying system information to the user and to the user inputs 322 for receiving inputs from the user.

The user interface 320 includes a liquid crystal display (LCD) touchscreen which can display system information such as charge state of the plurality of stacked battery cells 202, time to empty of the plurality of stacked battery cells 202, time to recharge the plurality of stacked battery cells 202 and output statuses. The display can show a set of bars representing the charge capacity of the pack at a point of time. The display may depict the charge capacity of the pack at a point in time with about 1% granularity. When sitting idle, the LCD may show the capacity of the battery presented by a percentage (%) on the range of about 0% to about100%. When attached to a load, the display may show the runtime remaining in HH:MM and when attached to the charger the time until full in HH:MM will be displayed. When attached to a load and/or when attached to a charger the LCD may show the capacity of the battery presented as a percentage (%) on the range of about 0, to about 100%. The user can also select to show instantaneous output conditions of each connector, how much current is flowing out of the unit (A), how much power is being drawn (W), the output voltage of each connector, electronic fuse status and condition (if operation conditions are normal or if the fuses have been triggered) and battery serial number.

The processor is configured to take data measurements from the battery and add a timestamp to the data measurement thereby associating the data with the exact time the date was collected. A user can download the data stored in memory and export the to a USB flash drive insertable into a USB port of the battery power station 100 or over WiFi. In some embodiments, the processor is connected to a wireless network module to communicate over WiFi.

In some embodiments, battery power station 100 may include a backup battery (not shown) that is independent of the battery module 200. The backup battery and related circuitry may be configured to power a small oscillator to keep the time for logging and reporting, for example, a real-time clock (RTC).

During operation, the user can remove the first removable end panel 118, 402, disconnect the power and logic terminals of the battery power module 200, remove the battery power module 200 and replace the existing battery power module 200 with a new battery power module 200. In some embodiments, the processor is configured to detect incompatible or aftermarket battery modules. When batteries are replaced, settings can be stored in memory such that the removal of the existing battery power module 200 does not require re-configuration of the battery power station 100.

The user can select an option in the user interface to instruct the processor to perform a built-in self-test to determine the health of the battery power module 200 and troubleshoot any errors. The test can be triggered manually through the menu system, through USB drive insertion on power up, or in the future will be triggered over WiFi. A report will be generated and can either be shown on the LCD, downloaded over USB, or sent over WiFi. The report will contain the date/time, battery serial number, and relevant information.

One of the output connectors can be either of 2 or more selectable output voltages. The default output for this connector for example may be 28V. It will show the voltage on the LCD but through the menu, the user can choose to change this connector to output another voltage or voltages, e.g. 48V.

Since electrical equipment may be damaged by applying the wrong voltage, the battery power system 100 will monitor if a device is powered from the output before changing the voltage. The user will have to disconnect the power cord from the device and then when the battery power system 100 detects that has happened, it will switch the voltage while also prompting the user on the LCD.

The following clauses further define particular aspects and embodiments of the present disclosure.

Clause 1. A battery power station including a top panel, a base, and side panels defining a structure; an electronics compartment within the structure including at least one printed circuit board; a battery compartment within the structure configured to receive a battery pack module; and a first removable end panel and a second removable end panel; wherein the base includes lateral protrusions having a hook structure configured to interdigitate with corresponding hook structure of the side panels forming a seal between the base and the side panels; wherein the first removable end panel and second removable end panel include a shell having protrusions extending from an inner surface of the shell and around a periphery of the shell, the protrusions configured to create a seal with the structure forming a seal between the structure and the first removable end panel and second removable end panel.

Clause 2. The battery power station of clause 1, wherein the top panel includes lateral protrusions having a hook structure configured to interdigitate with corresponding hook structure of the side panels forming a seal between the top and the side panels.

Clause 3. The battery power station according to any of the proceeding clauses, wherein the first removable end panel and the second removable end panel further include a support plate embedded within the shell configured to add structural rigidity to the shell.

Clause 4. The battery power station of clause 3, wherein the support plate further includes a gusset positioned in close proximity to the top panel, the gusset defines a lower position and an upper portion, wherein the lower portion of the gusset is angled with respect to the support plate.

Clause 5. The battery power station according to any of the proceeding clauses, wherein the first removable end panel and the second removable end panel are configured to be removed from the structure.

Clause 6. The battery power station according to any of the proceeding clauses, wherein the first removable end panel and the second removable end panel each further include a plurality of apertures configured to each receive a fastener, the fastener is configured to interface with at least a portion of the structure, wherein each of the plurality of apertures defines an aperture seal configured to seal the structure.

Clause 7. The battery power station according to any of the proceeding clauses, wherein the structure further includes an electrical connector, the electrical connector is in electrical communication with the at least one printed circuit board.

Clause 8. The battery power station of clause 7, wherein the structure further includes a cover mounted with respect to the electrical connector and is configurable between a first position and a second position with respect to the electrical connector.

Clause 9. The battery power station of clause 8, wherein the cover is over-molded around the electrical connector.

Clause 10. The battery power station according to any of the proceeding clauses, wherein the structure further includes at least one thermal interface pad mounted with respect to the battery pack module and the side panel, such that heat generated from the battery pack module is dissipated to the side panel to passively cool the battery pack module.

Clause 11. The battery power station according to any of the proceeding clauses, wherein the structure further includes at least one thermal interface pad mounted with respect to the at least one printed circuit board and the side panel, such that heat generated from the at least one printed circuit board is dissipated to the side panel to passively cool the at least one printed circuit board.

Clause 12. The battery power station according to any of the proceeding clauses, wherein the battery pack module includes a plurality of stacked battery cells enclosed within a frame and a thermal interface pad is attached to the plurality of stacked battery cells, wherein the thermal interface pad abuts the side panel when the battery pack module is inserted into the battery compartment such that heat generated from the plurality of stacked battery cells are dissipated from the to the side panels to passively cool the plurality of stacked battery cells.

Clause 13. The battery power station according to any of the proceeding clauses, wherein the shell of the first and second removable end panels is fabricated from a thermoplastic elastomer (TPE).

Clause 14. The battery power station according to any of the proceeding clauses, wherein the structure is a rectangular structure.

Clause 15. A battery system including a battery power station including a rectangular structure, a battery compartment within the rectangular structure configured to receive a battery pack module; and a first removable end panel and a second removable end panel; the first removable end panel includes a ferrous plate embedded within the shell such that an external charger can magnetically attach to the first removable end panel; a charger including at least two magnets to magnetically attach to the first removable end panel; and, a battery pack module including a plurality of stacked battery cells enclosed within a frame and thermal interface pads attached to the plurality of stacked battery cells, wherein the thermal interface pads are positioned on the plurality of stacked battery cells such that the thermal interface slide between tabs positioned on inner surfaces of the side panels.

Clause 16. The battery power station of clause 15, wherein the shell includes connection regions where the at least two magnets to magnetically attach to the first removable end panel.

Clause 17. The battery power station according to any of clauses 15-16, wherein the thermal interface pads abut the side panels when the battery pack module is inserted into the battery compartment such that heat generated from the plurality of stacked battery cells are dissipated from the to the side panels to passively cool the plurality of stacked battery cells without the need of internal airflow circulation or fans.

Clause 18. The battery power station according to any of clauses 15-17, wherein the first removable end panel and the second removable end panel each further include a support plate embedded within the shell, the support plate further comprises a gusset positioned in close proximity to the top panel, the gusset defines a lower position and an upper portion, wherein the lower portion of the gusset is angled with respect to the support plate.

Clause 19. A method of replacing a battery pack module of a battery power station, wherein the battery power station includes a top panel, a base, and side panels defining a rectangular structure; an electronics compartment within the rectangular structure including at least one printed circuit board; a battery compartment within the rectangular structure configured to receive the battery pack module, the battery pack module is in electrical communication with the at least one printed circuit board; and a removable end panel mounted with respect to the rectangular structure; the method including removing the removable end panel from the rectangular structure; electrically disconnecting the battery pack module from the printed circuit board; removing the battery pack module from the battery compartment; replacing the battery pack module with another battery pack module; and attaching the removable end panel to the rectangular structure.

Clause 20. The method of clause 19, further including a processor mounted with respect to the at least one printed circuit board, the processor is configured to detect incompatible or aftermarket battery pack modules.

Clause 21. The method according to any of clauses 19-20, wherein replacing the battery pack module does not require re-configuration of the battery power station.

While the invention has been described with reference to preferred embodiments, it will be understood by those skilled in the art that various changes may be made, and equivalents may be substituted for the elements thereof without departing from the scope of the invention as defined in the claims. In addition, many modifications may be made to adapt the teaching of the invention to particular use, application, manufacturing conditions, use conditions, composition, medium, size, and/or materials without departing from the scope of the invention as defined in the claims. Therefore, it is intended that the invention is not limited to the exemplary embodiments and best mode contemplated for carrying out this invention as described herein. Since many modifications, variations, and changes in detail can be made to the described examples, it is intended that all matters in the preceding description and shown in the accompanying figures be interpreted as illustrative and not in a limiting sense.

## Claims

1. A battery power station (100) comprising:
a top panel (110), a base (112), and side panels (114, 116) defining a structure;
an electronics compartment (104) within the structure including at least one printed circuit board (108);
a battery compartment (102) within the structure configured to receive a battery pack module (200); and
a first removable end panel (118, 402) and a second removable end panel (120, 402);
wherein the base (112) includes lateral protrusions (126) having a hook structure (127) configured to interdigitate with corresponding hook structure (134) of the side panels (114, 116) forming a seal between the base (112) and the side panels (114, 116);
wherein the first removable end panel (118, 402) and second removable end panel (120, 402) include a shell (174) having protrusions (176) extending from an inner surface of the shell (174) and around a periphery of the shell (174), the protrusions (176) configured to create a seal with the structure forming a seal between the structure and the first removable end panel (118) and second removable end panel (120).

2. The battery power station (100) of claim 1, wherein the top panel (110) comprises lateral protrusions (142) having a hook structure (144) configured to interdigitate with corresponding hook structure (146) of the side panels (114, 116) forming a seal between the top panel (110) and the side panels (114, 116).

3. The battery power station (100) of any preceding claim, wherein the first removable end panel (118, 402) and the second removable end panel (120, 402) further comprise a support plate (178, 404) embedded within the shell (174) configured to add structural rigidity to the shell (178), optionally wherein the support plate (404) further comprises a gusset (406) positioned in close proximity to the top panel (110), the gusset (406) defines a lower portion (408) and an upper portion (410), and the lower portion (408) of the gusset (406) is angled with respect to the support plate (404).

4. The battery power station (100) of any preceding claim, wherein the first removable end panel (118, 402) and the second removable end panel (120, 402) each further comprise a plurality of apertures (180) configured to each receive a fastener (420), the fastener (420) is configured to interface with at least a portion (152, 150) of the structure, wherein each of the plurality of apertures (180) defines an aperture seal (418) configured to seal the structure.

5. The battery power station (100) of any preceding claim, wherein the structure further comprises an electrical connector (342), the electrical connector (342) is in electrical communication with the at least one printed circuit board (108), optionally wherein the structure further comprises a cover (343) mounted with respect to the electrical connector (342) and is configurable between a first position and a second position with respect to the electrical connector (342), and optionally wherein the cover (343) is over-molded around the electrical connector (342).

6. The battery power station (100) of any preceding claim, wherein the structure further comprises at least one thermal interface pad (210, 212) mounted with respect to the battery pack module (200) and the side panel (114, 116), such that heat generated from the battery pack module (200) is dissipated to the side panel (114, 116) to passively cool the battery pack module (200); and/or wherein the structure further comprises at least one thermal interface pad (213) mounted with respect to the at least one printed circuit board (108) and the side panel (114, 116), such that heat generated from the at least one printed circuit board (108) is dissipated to the side panel (114, 116) to passively cool the at least one printed circuit board (108), and/or wherein the battery pack module (200) comprises a plurality of stacked battery cells (202) enclosed within a frame (204) and a thermal interface pad (210, 212) is attached to the plurality of stacked battery cells (202), wherein the thermal interface pad (210, 212) abuts the side panel (114, 116) when the battery pack module (200) is inserted into the battery compartment (102) such that heat generated from the plurality of stacked battery cells (202) is dissipated to the side panel (114, 116) to passively cool the plurality of stacked battery cells (202).

7. The battery power station (100) of any preceding claim, wherein the shell (174) of the first (118, 402) and second (120, 402) removable end panels is fabricated from a thermoplastic elastomer (TPE).

8. The battery power station (100) of any preceding claim, wherein the structure is a rectangular structure, and/or wherein the first removable end panel (118, 402) and the second removable end panel (120, 402) are configured to be removed from the structure.

9. A battery system comprising:
a battery power station (100) including a rectangular structure, a battery compartment (102) within the rectangular structure configured to receive a battery pack module (200); and a first removable end panel (118, 402) and a second removable end panel (118, 402) comprising a shell (174); the first removable end panel (118, 402) includes a ferrous plate (170) embedded within the shell (174) such that an external charger (250) can magnetically attach to the first removable end panel (118, 402);
the external charger (250) including at least two magnets (260) to magnetically attach to the first removable end panel (118, 402); and,
a battery pack module (200) including a plurality of stacked battery cells (202) enclosed within a frame (204) and thermal interface pads (210, 212) attached to the plurality of stacked battery cells (202), wherein the thermal interface pads (210, 212) are positioned on the plurality of stacked battery cells (202) such that the thermal interface pads (210, 212) slide between tabs (150) positioned on inner surfaces of side panels (114, 116) of the rectangular structure.

10. The battery system of claim 9, wherein the shell (174) includes connection regions (172) where the at least two magnets (260) to magnetically attach to the first removable end panel (118, 402) are accommodated.

11. The battery system of claim 9 or 10, wherein the thermal interface pads (210, 212) abut the side panels (114, 116) when the battery pack module (200) is inserted into the battery compartment (102) such that heat generated from the plurality of stacked battery cells (202) is dissipated to the side panels (114, 116) to passively cool the plurality of stacked battery cells (202) without the need of internal airflow circulation or fans.

12. The battery system of any of claims 9-11, wherein the first removable end panel (118, 402) and the second removable end panel (120, 402) each further comprise a support plate (404) embedded within the shell (174), the support plate (404) further comprises a gusset (406) positioned in close proximity to a top panel (110) of the rectangular structure, the gusset (406) defines a lower portion (408) and an upper portion (410), wherein the lower portion (408) of the gusset (406) is angled with respect to the support plate (404).

13. A method of replacing a battery pack module (200) of a battery power station (100), wherein the battery power station (100) comprises a top panel (110), a base (112), and side panels (114, 116) defining a rectangular structure; an electronics compartment (104) within the rectangular structure including at least one printed circuit board (108); a battery compartment (102) within the rectangular structure configured to receive the battery pack module (200), the battery pack module (200) is in electrical communication with the at least one printed circuit board (108); and a removable end panel (118, 120, 402) mounted with respect to the rectangular structure; the method comprising:
removing the removable end panel (118, 120, 402) from the rectangular structure;
electrically disconnecting the battery pack module (200) from the printed circuit board (108);
removing the battery pack module (200) from the battery compartment (102);
replacing the battery pack module (200) with another battery pack module (200); and
attaching the removable end panel (118, 120, 402) to the rectangular structure.

14. The method of claim 13, further comprising a processor mounted with respect to the at least one printed circuit board (108), and the processor is configured to detect incompatible or aftermarket battery pack modules (200).

15. The method of claim 13 or 14, wherein replacing the battery pack module (200) does not require re-configuration of the battery power station (100).
